# EUROPEAN PATENT SPECIFICATION

(11) **EP 0 474 470 B1**
(45) Date of publication and mention of the grant of the patent: **04.02.1998**
(21) Application number: 91308080.0
(22) Date of filing: 04.09.1991
(51) Int. Cl.: B32B 27/30, B32B 27/40, B32B 27/18, B32B 27/04, B32B 27/10

(54) **Urethane acrylate surfaced laminate**
Mit Urethanacrylat beschichtetes Laminat
Produit stratifié à surface d'acrylate d'uréthanne

(30) Priority: 05.09.1990 US 577483
(43) Date of publication of application: 11.03.1992
(73) Proprietor: Wilsonart International, Inc., Temple, Texas 76501 (US)
(72) Inventor: Dion, Andrew N., Temple, Texas 79502 (US)
(74) Representative: Howden, Christopher Andrew

(56) References cited:
- EP-A- 0 245 728
- US-A- 4 789 604
- US-A- 4 801 495

## Description

### BACKGROUND OF THE INVENTION

### 1. Field of the Invention

This invention relates to a urethane acrylate surfaced laminate, and to a method for its manufacture. In particular, this invention is of a decorative laminate which has as its outer surface a layer of radiation-polymerized urethane acrylates featuring enhanced scratch, wear and chemical resistance, and which shows markedly decreased tendencies to delaminate, and of a method of manufacturing such a laminate.

### 2. Decription of the Prior Art

Laminates are widely used in the building and furniture industries for coating walls, furniture, and the like, to enhance their scratch, wear and chemical resistance while at the same time enhancing the aesthetic appeal of the coated item.

Laminates are typically prepared by pressing together at elevated temperatures a core layer and a covering layer, or decorative layer. The core layer may itself consist of a thermopressed stack of resinated paper webs or it may be plastic-based.

Paper-based laminates are susceptible to attack by mineral acids and, since the type of resin typically used in the covering layer is vulnerable to hydrolysis, are not sufficiently weather-resistant. Because of these shortcomings, laminates of this kind can only be used in certain limited benign applications. Whenever it is desired to use laminates under more demanding circumstances, provisions must be made in order to improve the resistance of the laminates.

Plastic-based laminates, incorporating, for example, polyester or acrylate, are typically vulnerable to scratching and are not sufficiently resistant to organic solvents. With these laminates also, steps must be taken to improve the resistance of the laminates.

It is known in the art to enhance the scratch, wear, and chemical resistance of laminates by including as part of the laminate an outermost layer which has the desired properties. It is known to create such a protective layer from a synthetic resin of one or more radiation-polymerized components selected from unsaturated acrylates.

U.S. Patent No. 4,801,495, issued January 31, 1989, discloses a decorative laminate having a core layer and a decorative layer. In addition, the laminate features an outer layer made up of one or more radiation-polymerized components such as unsaturated acrylates or methacrylates. The outer layer has a scratch resistance of at least 1.5 Newtons. Also disclosed is a method of manufacturing the decorative laminate which includes applying the radiation-polymerizable components to the layer immediately beneath and then radiating the mixture to polymerize. The laminate is then consolidated by pressing together at elevated temperatures and pressures.

The technology disclosed in the ′495 patent has several shortcomings, the most basic of which involves the tendency of the protective outer layer to delaminate, or disengage from the layers below. Because the bond between the outer protective layer and the layers immediately below is primarily mechanical, the structure may be susceptible to a mode of failure wherein the outer protective layer, with time or upon bending or other stressing, peels off and separates from the layer beneath. Such a failure greatly reduces the commercial value of the laminate product.

It is also known from US-A-4 789 604 a decorative laminate produced by consolidating a plurality of layers under heat and pressure and having a protective outer layer, the laminate comprising:
a thermoset resin-impregnated core paper layer;
a thermoset resin impregnated decorative paper layer bonded to the core layer;
a protective outer layer bonded to the decorative layer, the protective layer being produced by polymerising a resin-forming mixture comprising:
   (1) unsaturated resin-forming materials comprising acrylated urethane and a diluting monomer and
   (2) a photo initiator

It would be desirable to have a scratch, wear, and chemical resistant laminate wherein the protective outer layer is so tightly secured to the layer just beneath as to dramatically reduce the tendency of the product to delaminate, or separate into layers.

### SUMMARY OF THE INVENTION

The present invention is directed to a decorative laminate in accordance in independent claim 1 and to a process of manufacturing such a laminate in accordance with independent claim 17.

The present invention successfully addresses the shortcomings of the presently known decorative laminates by providing a laminate which features a protective outer layer providing superior scratch, wear, and chemical resistance, and which is so tightly bound to the layer immediately beneath as to dramatically reduce or eliminate the tendency of the protective layer to delaminate, or separate from the layer immediately below.

The laminate of this invention takes advantage of the highly desirable properties known to be associated with radiation-polymerizable urethane acrylate coated surfaces, yet provides a protective surface which is more securely bonded to the surface onto which the protective surface is coated than has heretofore been known to be possible.

This invention discloses a novel composition for the urethane acrylate protective layer and a novel method for creating and applying the protective layer to the surface to be protected.

The manufacturing process for the laminate of this invention involves two steps. The compounds are first applied to a finish paper, or release sheet, and partly cured by UV radiation. The partly cured material is placed in contact with the surface to be protected, and the laminate is consolidated under heat and pressure. This lamination process completely cures the outer protective layer and bonds it to the surface.

The reaction mixture which will form the protective layer contains acrylate oligomers. The reaction mixture also contains one or more monomers. In addition, the mixture contains one or more photoinitiators which serve to initiate the polymerization during the UV curing. Also included are a thermal catalyst and a coupling agent. The thermal catalyst serves to promote the chemical cross-linking reaction during the thermopressing, while the coupling agent serves to chemically join the protective layer with the layer immediately beneath during the thermopressing step.

### DESCRIPTION OF THE PREFERRED EMBODIMENTS

The present invention is of a decorative laminate having enhanced scratch, wear, and chemical resistance properties as a result of the inclusion as the outermost layer of the laminate of a radiation-polymerized protective layer. The present invention is also a method for creating the protective layer and for securely bonding the protective layer onto the surface immediately beneath the protective layer.

It is known in the art that an outer layer made up of one or more synthetic resins which are polymerized by radiation can enhance the weather and scratch resistance of a laminate and can make it substantially less vulnerable to attack by acids and organic solvents.

In the preferred embodiment of this invention, a material made up of a urethane acrylate oligomer, one or more monomers, and one or more photoinitiator, thermally activated catalyst, and coupling agent, is applied to finish paper or release sheet. The material is then exposed to an appropriate amount of ultraviolet (UV) radiation. The photoinitiator serves to catalyze or initiate the polymerization reaction upon exposure to the radiation.

The extent of the exposure to radiation is controlled so as to limit the degree of polymerization of the resin to a desired extent. The partial curing serves to slightly harden the material, facilitating its handling during the subsequent manufacturing steps, while leaving a substantial amount of unpolymerized resin able to participate in the final cure during the thermopressing process step. During the final curing which takes place during the thermopressing, the protective layer is able to cross-link with the layer immediately beneath to create a strong bond of the two layers.

Once the material located on the finish paper has been partially cured, it can be cut up into appropriate sized sheets. Alternatively, the finish paper coated on one side with the partially cured material can be rolled up and stored for future use.

To apply the protective layer to a laminate, the finish paper, or release paper coated on one side with the partially cured material is placed on the surface to be protected, typically the decorative sheet, with the partially cured material in contact with the surface to be protected.

The protective layer and the underlying laminate are then pressed together at elevated temperatures. The heat activates a thermally sensitive catalyst in the partially cured protective layer which, in turn, promotes the further polymerization of the resins in the protective layer.

A coupling agent present in the protective layer reacts with both the resins of the protective layer and that of the layer immediately beneath the protective layer, chemically binding the two layers.

The surface to be protected by the urethane acrylate outer layer typically forms a standard laminate composed of an internal core and an external decorative sheet. The core layer carries out the load-bearing function of the laminate. It can be made of wood or of other materials such as polyvinyl chloride, polyethylene, or other plastic materials. The core layer is more typically made up of sheets of thermopressed paper, such as soda kraft paper, impregnated with thermosetting synthetic resin, such as phenol-formaldehyde resin. Depending on the desired laminate thickness, from 1 to 100 or more sheets, stacked one on top of the other, can be thermopressed together to form the core.

The core layer may have on its outer surface an additional layer containing a thermosetting amino plastic or phenolic resin. Typically, a decorative sheet is applied directly onto the core layer or onto the additional layer. It is on the exterior surface of this decorative sheet that the radiation-polymerizable urethane acrylate protective layer is applied. The protective layer would typically be clear, transparent and pigment-free.

The decorative layer typically contains one or more thermosetting synthetic resins, such as amino plastic resin, and is located on core layers made up of the soda kraft paper, or of randomly deposited wood or cellulose fibers impregnated with phenol resin.

The radiation-polymerized synthetic resin protective layer is applied to the outer surface of the decorative layer. The protective layer contains urethane acrylates capable of being radically polymerised by UV radiation and which are present either individually or together in a polymerizable mixture.

The major component is an acrylate prepolymer or oligomer. Preferred is an acrylate oligomer. The oligomer would ordinarily be a highly viscous, near-solid, with viscosity on the order of 26 N-Sec/m² (2600 poise). In order to reduce the viscosity and render the oligomer easier to handle, a number of lower viscosity materials are typically added. Typically also present in the copolymerizable mixture, besides the predominant oligomeric component, may be additional components, usually diacrylates or similar monomers whose presence has a diluting effect on the mixture.

For example, the present invention can readily be practiced by using an acrylated urethane product known as Ebercryl 88000-20R, which is a commercial product of Radcure Specialties, Inc. of Louisville, Kentucky. According to the Material Safety Data Sheet, Ebercryl 8800-20R has the following composition:

| | **Wt. %** |
|---|---|
| Acrylate oligomer | >70.0 |
| Ethoxyethoxyethyl acrylate | < 8.0 |
| Tripropylene glycol diacrylate (TRPGDA) | 20.0 |
| Polymeric isocyanate | < 0.2 |
| Hydroquinone | < 0.1 |

The acrylate oligomer can be present in concentration of from about 40 to about 90% by weight, preferably from 40 to 70% by weight, and most preferably from 50 to 60% by weight. The Ebercryl 8800-20R has a viscosity at 65°C of from 1.8 x 10⁻² to 3 x 10⁻² N-Sec/m² (1,800 to 3,000 cps). Depending on the amounts of additional components added, the polyfunctional unsaturated aliphatic acrylate oligomer typically would constitute from about 30 to about 90 wt% of the total mixture, preferably from about 55 to about 85 wt% of the mixture.

The components used have a pronounced tendency to polymerize radically under the influence of UV radiation. The radically polymerizable prepolymer is a polyfunctional unsaturated aliphatic acrylate oligomer.

Examples of additional suitable monomers or oligomers that may be used in a radically copolymerizable mixture include, besides the prepolymer, a mono-, di-, tri-, tetra-, penta-, or hexacrylate. The acrylates in the mono- to hex-form are esters of mono or polyfunctional alcohols, i.e., polyols with 1 to 6 OH-groups with acrylic acid and are therefore also known as polyolacrylates. Suitable diacrylates are esters of acrylic acid with aliphatic divalent alcohols, especially ethylene glycol, 1,2-propylene glycol, 1,3-propylene glycol, butanediols, 1,6-hexanediol or neopentyl glycol; with aliphatic ether alcohols, in particular diethylene glycol, dipropylene glycol, dibutylene glycol, polyethylene glycols or polypropylene glycols; with oxyalkylated compounds of the above-named aliphatic alcohols and either alcohols; or also with aromatic dihydroxyl compounds, in particular bisphenol A, pyrocatechol, resorcinol, hydroquinone, p-xylylene glycol or p-hydroxybenzyl alcohol. Preferred diacrylates are 1,6-hexanediol diacrylate, tripropylene glycol diacrylate and 1,4-butanediol diacrylate. Preferred triacrylates are trimethylol propane triacrylate and pentacrythritol triacrylate.

Epoxy acrylate and silicone acrylate oligomers, which in addition to the urethane acrylate and unsaturated polyester acrylate oligomers mentioned above, are suitable polyfunctional prepolymers, can be used in the radically copolymerizable mixture along with the diacrylates or triacrylates already mentioned.

The prepolymers are produced, for example, from hydroxylated copolymers in which the hydroxyl groups are distributed along the copolymer chain. Unsaturated acrylic copolymers are obtained from this copolymer by esterification of the hydroxyl groups with acrylic acid. To produce intermediate unsaturated acrylic copolymers, the hydroxyl group is attached to the end of the chain when the hydroxylated copolymers are produced. Urethane acrylate oligomers are produced by the reaction of acrylates or methacrylates containing hydroxy groups, such as hydroxyethyl methacrylate, with multivalent isocyanates, preferably diisocyanates. The di- or polyisocyanates can preferably be reaction products of diols, polyether diols, or polyester diols having a stoichiometric excess of monomeric di- or polyisocyanate.

If the polyfunctional prepolymer predominates in the polymerizable mixture, then, as the fundamental resin, its chemical nature determines the characteristics of the cured surface layer. As the diluting monomer, the added acrylate or methacrylate in mono- to hex-form makes it possible to adjust the viscosity of the mixture to be cured, which is normally within the range from 20 to 100 poise (at 20°C), and participates fully in the radical polymerization. In the process of irradiation, the hardening of the coating is the result of the radical polymerization at the double bonds of the prepolymer and, if present, of the diluting monomers or oligomers.

As previously stated, it is useful to reduce the viscosity of the uncured protective layer prior to coating the finish paper with the material. The reduction of the viscosity can be accomplished by any convenient means, preferably by the addition of a lower viscosity material, such as a di- or triacrylate. It is preferable to add sufficient trimethylolpropane triacrylate (TMPTA) to lower the overall viscosity to 3000 mPa·s (cps), which is low enough to allow the mixture to be conveniently handled during processing yet high enough so that the mixture will not run off the finish paper prior to the partial curing promoted by the UV radiation. It is preferable to add sufficient TMPTA so that the concentration of the TMPTA in the overall mixture will be from 15 to 45% by weight, preferably from 25 to 35%, and most preferably from 32 to 34%. It should be noted that use of excessive amounts of TMPTA tends to render the protective layer brittle and more subject to cracking.

It may be desirable to use an acrylate of higher functionality as the diluting material. This could be used in addition to, or in place of, the di- or triacrylates. One possible high functionality acrylate is SR-399, sold by Sartomer Company of West Chester, Pennsylvania. SR-399 is the commercial name for dipentaerythritol hydroxypenta acrylate. The SR-399 has the advantage of providing enhanced chemical resistance over that which could be achieved with lower-functionality monomers.

The UV-polymerizable material must include at least one photoinitiator. A photoinitiator system comprising several components is usually used. Photoinitiators are catalysts which, upon absorption of ultraviolet light, form radicals, which, in turn, initiate the radical polymerization. Most photoinitiators include at least one carbonyl group, which carbonyl group is in conjunction with an aromatic ring.

The preferred photoinitiator is 2-hydroxy-2-methyl-1-phenyl-propan-1-one of the aromatic hydroxy ketone family. It is available commercially as Darocur 1173 from EM Industries, Inc. of Hawthorne, New York. Darocur 1173 has a chemical formula of C₁₀H₁₂O₂ and can be represented by the following chemical structure:

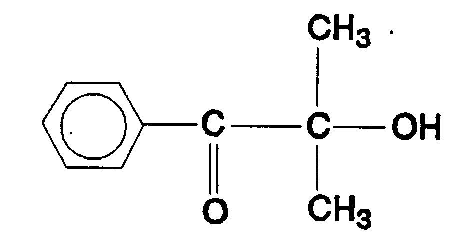

Darocur 1173 is a highly reactive photoinitiator. The compound is a hydrophobic liquid and can easily be incorporated in the UV-polymerizable material. Use of the photoinitiator does not result in yellowing of the transparent coating and the cured ,film shows excellent color stability. The Darocur 1173 has low viscosity and serves, in part, to slightly lower the overall viscosity of the uncured protective layer. The compound does not corrode the rollers used in the lamination process and its addition to UV-curable resins does not adversely affect the storage stability of the UV-curable system. The Darocur 1173 is used in an amount of from about 0.2 to about 1.5% by weight of the entire UV-polymerizable mixture, preferably from 0.2 to 0.8%, most preferably from 0.3 to 0.5%.

The UV-polymerizable system also contains a thermally activated catalyst. A wide variety of compounds can be used. These can include catalysts that are activated at temperatures between 150 and 350°F, such as benzoyl peroxide, 2,5-dimethyl-2,5-bis-(2-ethylhexyl peroxy)hexane, t-amyl peroxyoctoate, t-butyl peroxyoctoate, and lauroyl peroxide, 1,1-bis-t-butyl peroxy cyclohexane, 1,1-bis-t-amyl peroxy cyclohexane, and dicumyl peroxide. Preferably, the thermally activated catalyst is tertiary-butyl peroxybenzoate (TBPB). The thermally activated catalyst is used to initiate polymerization reactions during the thermopressing step of the manufacture of the laminates. The thermopressing step cures the protective layer and bonds it to the decorative layer. The two layers cross-link so as to reduce or eliminate the tendency of the protective layer to delaminate, or peel off, from the layer immediately beneath.

The uncured protective layer also includes a coupling agent capable of chemically binding the polymerizable materials of the protective layer with those of the layer immediately beneath. Organic titanate esters and organosilane coupling agents enhance the bond between dissimilar resins due to their bifunctional nature. One end of the molecule reacts with the protective layer while the other reacts with the layer immediately beneath. Additives capable of functioning in this manner, include, but are not limited to, amino methoxy silanes, methacryloxypropyl tri-methoxy silane, and epoxy methoxy silanes. Another, and preferred, coupling agent is glycidoxypropyltrimethoxysilane, available commercially as Z-6040 Silane from Dow Corning. The Z-6040 Silane is used in concentrations of from 0.5 to 3% by weight of the total mixture, preferably from 0.75 to 1.5%, and most preferably from 1.0 to 1.3%. The chemical binding between the protective and the lower layers brought about by the Z-6040 Silane serves to dramatically reduce the tendency of the protective layer to peel off, or delaminate, with time and use. The use of the coupling agent serves to render the protective layer an integral part of the laminate and thus provides long-lasting protection of the laminate.

The synthetic resin polymerized by radiation may additionally contain the usual additives, such as plasticizers, fillers, pigments, and stabilizers, for attaining the desired decorative, mechanical, and physical surface characteristics. Examples of these substances include barium sulfate, silica, aluminum oxide, and pigments that are colorfast when exposed to light. For most uses it would be desirable to have a transparent pigment-free protective layer.

To produce the decorative laminate panel, the transparent, liquid, radiation-polymerizable compounds and the various additives are applied in some convenient manner to the release sheet, or finish paper. The radiation-polymerizable mixture may, if desirable, contain certain pigments so as to give the protective layer a certain hue while still maintaining its transparency. Typically, a 0.1 mm (4 mil) thick layer of the radiation-polymerizable mixture is preferred, but any convenient thickness may be used.

The finish paper, or release sheet, containing the radiation-polymerizable mixture on one side is exposed to UV radiation to partially cure the resin in order to provide a tack free surface. This step is generally known as B-stage. To initiate the polymerization effected by radiation, a conventional source for forming free radicals, such as a photoinitiator, is preferred.

The partial curing of the resin effected by the photoinitiators facilitates the further handling of the finish paper and protective layer. The UV radiation can be generated by any convenient means, for example through medium-pressure mercury arc lamps having wavelengths of between about 200 and 400 nanometers. A typical lamp power output is in the range of about from 60 w/cm (150 W/in) to 120 w/cm (300 W/in). Typical curing times are about in the range of 2-4 sec at line speeds of 10-12.5 m/min (400-500 in/min). The finish paper containing the partially cured protective layer can be rolled and stored for future use. Alternatively, it can be cut up into sheets of appropriate lengths. The sheets can either be stored for future use or they can be immediately utilized in the manufacture of high resistance laminates.

In the next step of the process, the finish paper containing the partially cured protective layer is placed on top of a decorative layer which had been previously impregnated with a resin, such as melamine, with the partially cured protective layer in contact with the decorative layer. This assembly rests on one or more core sheets which provide the laminate with thickness.

The finish paper, the decorative print sheet, and the core layers are assembled and thermopressed together. In this step, the layers are pressed together under a pressure of between 5520 and 9660 Kpa (800 and 1400 psi), preferably between 6900 and 8280 Kpa (1000 and 1200 psi), at elevated temperatures of from 107.2°C to 176.6°C (225 to 350°F), preferably from 126.6°C to 137.7°C (260 to 280°F). The reaction time can range from about 30 to about 90 minutes. The exact times and temperatures for a specific product can readily be determined by one skilled in the art with routine experimentation.

The fiber-containing layers of the stack, which preferably comprise soda kraft papers or a bonded fabric made of wood and/or cellulose fibers, contain the thermosetting resins typical in high pressure laminates, in particular phenol-formaldehyde resins, while the decorative papers which are also be present in the stack contain an amino plastic resin, in particular a malamine resin. The proportion of thermosetting resins amounts to 20 to 70% by weight, preferably about 50%, based on the weight of an individual layer. The thermosetting resins of the core and decorative layers are pre-cured and dried in the conventional manner.

The saturation or impregnation of the fiber-containing layers or paper layers is effected by, for example, immersion in a bath having a solution or dispersion containing the thermosetting resin, or by applying or spraying by means of a dispensing system. The solvent or dispersing agent is of the aqueous alcohol, aqueous acetone, or aqueous type, depending on the synthetic resin used. It may also contain up to 20% by weight of a flame retardant.

As in the conventional manufacture of high pressure laminates, the packet, comprising the fiber-containing core layer, the decorative layer, and the radiation-polymerized surface layer is thermopressed to form a decorative panel causing the thermosetting resins to completely cure. However, if the core layer comprises a wood, plastic, or metal panel, then the temperature and pressure can usually be reduced to 80°C, and 5 bar, respectively.

The pressing is effected in either a stationary, once-through device, or in a continuous press apparatus. The number and thickness of the fiber-containing layers in the core layer, or the thickness of the core layer, is selected depending on the intended use of the panel.

During the thermopressing, the thermal catalyst, such as TBPB, serves to promote the reaction of the resins. In the presence of a coupling agent, such as the Z-6040 Silane, reaction also occurs between the resins of the protective and those of the decorative layers immediately beneath, which serves to chemically bind the two layers together. It is during the thermopressing process that the final consolidation and cure takes place for all components of the laminate. The acrylated urethane film is thus transferred from the finish paper to the decorative print sheet. At the conclusion of the thermopressing step, the finish paper, which imparts gloss and texture to the laminate surface, is removed and discarded.

The resulting laminate has improved scratch, chemical and wear resistance over conventional laminates not having a protective layer. Furthermore, the laminate of the present invention has superior delamination characteristics compared with laminates formed without the benefit of a coupling agent and/or a thermally activated catalyst.

### EXAMPLE

A laminate was manufactured as described above. The formulation used was as follows:

| | Amount (gms) |
|---|---|
| Ebercryl 8800-20R | 57.64 |
| TMPTA | 41.98 |
| Darocur 1173 | 0.19 |
| TBPB | 0.19 |
| Z-6040 Silane | 1.20 |

The urethane acrylate surface showed a scratch resistance of 7 Newtons, compared with 4 Newtons for a standard laminate. The scratch resistance test was carried out in accordance with method ISO 4586/2, Clause 14. In this test, the minimum load applied to a diamond scratching point, which produces a continuous surface mark visible to the naked eye, is the resistance to scratching of the surface. The minimum load is determined by applying successively decreasing loads to the diamond point and observing the effect.

The urethane acrylate surface of the present invention had a wear resistance of 1428, compared with 793 for a standard laminate. The wear resistance was measured in accordance with the method of NEMA LD3.1-1985. In this test, 180 grit sandpaper is applied to the wheels of a Taber abrading machine, Model 503. The number of revolutions is used to calculate the wear resistance.

The chemical resistance of the urethane acrylate surface of the present invention and of the standard laminate were tested by placing a drop of each chemical on the surface, covering the drop with a watchglass, and noting the effect, if any, on the laminate surface after 16 hours. The results were as follows:

| | **This Invention** | **Standard Laminate** |
|---|---|---|
| Slight Effect: | Glacial acetic acid | Acetic acid 10% |
| | Sulfuric 25% | Acetic acid 98% |
| | Sulfuric 60% | Uric acid |
| | Sulfuric 77% | Sodium hydroxide 5% |
| | Sulfuric 96% | Sodium hydroxide 10% |
| | Hydrochloric 37% | Ag eosin bluish 5% (in water) Tincture of Iodine |
| Severe Effect: | Safranin O | Nitric 25% |
| | | Nitric 30% |
| | | Sulfuric 25% |
| | | Sulfuric 60% |
| | | Sulfuric 77% |
| | | Sulfuric 96% |
| | | Hydrochloric 20% |
| | | Hydrochloric 30% |
| | | Hydrochloric 37% |
| | | Phosphoric 75% |
| | | Phosphoric 90% |
| | | Formic 50% |
| | | Formic 90% |
| | | Hydrofluoric acid 48% |
| | | Aqua Regia |
| | | Perchloric acid |
| | | Sodium hypochlorite 5% |
| | | Cupra ammonia |
| | | Zinc chloride |
| | | Salt mixture |
| | | Cleaning Solution |
| | | Phosphorus pentoxide |
| | | Silver nitrate 10% |

The delamination characteristics of the urethane acrylate surface of the present invention and of the standard laminate were tested by immersion into boiling water for five hours. The coating containing the coupling agent did not blister or delaminate from the laminate surface.

## Claims

1. A decorative laminate produced by consolidating a plurality of layers under heat and pressure and having a protective outer layer, the laminate comprising:
a thermoset resin-impregnated core paper layer;
a thermoset resin impregnated decorative paper layer bonded to the core layer;
a protective outer layer bonded to the decorative layer, the protective layer being produced by polymerising a resin-forming mixture comprising:
(1) unsaturated resin-forming materials comprising acrylated urethane and a diluting monomer and
(2) a photo initiator,
characterised in that the resin-forming mixture includes a thermally activated catalyst, and further includes sufficient photo initiator for partially curing the resin-forming mixture to a tack free B-stage for facilitating the further handling of the acrylate and/or methacrylate protective outer layer prior to the consolidation of the resin-forming layers, said resin-forming mixture further comprising a coupling agent; the diluting monomer being selected from the group consisting of trimethylolpropane triacrylate, pentaerythritol triacrylate or dipentaerythritol hydroxypenta acrylate or mixtures thereof; the resin-forming mixture including sufficient thermally activated catalyst for substantially fully curing the resin-forming mixture during the consolidation of the resin-forming layers under heat and pressure, thereby providing a decorative laminate having an acrylate and/or methacrylate protective outer layer with improved delamination characteristics.

2. A decorative laminate according to claim 1 wherein the coupling agent comprises an organosilane coupling agent.

3. A decorative laminate according to claim 1 wherein the resin-forming materials comprise said acrylated urethane and trimethylolpropane triacrylate.

4. A decorative laminate according to claim 1 wherein the resin-forming materials comprise said acrylated urethane and dipentaerythritol hydroxypenta acrylate.

5. A decorative laminate according to claim 3 wherein the resin-forming materials comprise from 15 to 45 wt % of trimethylolpropane triacrylate.

6. A decorative laminate according to claim 3 wherein the resin-forming materials comprise from 25 to 35 wt % of trimethylolpropane triacrylate.

7. A decorative laminate according to claim 1 wherein the resin-forming mixture further comprises a plasticizer, filler, pigment or stabilizer.

8. A decorative laminate according to claim 1 wherein the resin-forming materials comprise from 55 to 85 wt % of the resin-forming mixture.

9. A decorative laminate according to claim 1 wherein the photo initiator comprises an aromatic hydroxy compound.

10. A decorative laminate according to claim 1 wherein the photo initiator comprises 2-hydroxy-2-methyl-1-phenyl-propan-1-one.

11. A decorative laminate according to claim 1 wherein the photo initiator comprises from 0.2 to 1.5 wt % of the resin-forming mixture.

12. A decorative laminate according to claim 1 wherein the photo initiator comprises from 0.2 to 0.8 wt % of the resin-forming mixture.

13. A decorative laminate according to claim 1 wherein the thermally activated catalyst comprises from 0.2 to 0.8 wt % of the resin-forming mixture.

14. A decorative laminate according to claim 2 wherein the coupling agent comprises an amino methoxy silane, methacryloxypropyl tri-methoxy silane, or an epoxy methoxy silane.

15. A decorative laminate according to claim 2 wherein the coupling agent comprises glycidoxypropyl-trimethoxysilane.

16. A decorative laminate according to claim 2 wherein the coupling agent comprises from 0.5 to 3.0 wt % of the resin-forming mixture.

17. A process for manufacturing a decorative laminate having a protective outer layer comprising superimposing at least one core layer of thermoset resin-impregnated paper, a decorative paper layer impregnated with thermoset and a protective layer formed from a resin-forming mixture including unsaturated resin-forming materials comprising acrylated urethane and a diluting monomer, and further including a photoinitiator, and consolidating said layers under heat and pressure to form said laminate, characterised in that said protective layer is formed by:-
coating on a release sheet said resin-forming mixture, the monomer in said mixture being selected from the group consisting of trimethylol propane triacrylate, pentaerythritol triacrylate or dipentaerythritol hydroxypenta acrylate or mixtures thereof;
said mixture further comprising sufficient photo initiator for partially curing the resin-forming mixture to a tack free B-stage; and further including a thermally activated catalyst and a coupling agent;
the method including partially curing the resin-forming mixture on the release sheet with ultraviolet radiation to a tack free B-stage;
placing the release sheet containing the partially cured resin-forming mixture on top of a partially cured thermosetting resin impregnated decorative layer of paper with the partially cured resin-forming mixture in contact with the top surface of the decorative layer;
placing the decorative layer over a partially cured thermosetting resin impregnated core layer of paper, and
consolidating the protective layer, decorative layer, and core layer under heat and pressure, to form the decorative laminate, said resin-forming mixture including sufficient thermally activated catalyst for substantially fully curing the resin-forming mixture during the consolidation of the resin-forming layers under heat and pressure.

18. A process according to claim 17 wherein the coupling agent comprises an organosilane coupling agent.

19. A process according to claim 17 wherein the resin-forming materials comprises said acrylated urethane and trimethylolpropane triacrylate.

20. A process according to claim 17 wherein the resin-forming materials comprise said acrylated urethane and dipentaerythritol hydroxypenta acrylate.

21. A process according to claim 19 wherein the resin-forming material comprise from 15 to 45 wt % trimethylolpropane triacrylate.

22. A process according to claim 19 wherein the resin-forming materials comprise from 25 to 35 wt % trimethylolpropane triacrylate.

23. A process according to claim 17 wherein the resin-forming mixture further comprises a plasticizer, filler, pigment or stabilizer.

24. A process according to claim 17 wherein the resin-forming materials comprise from 55 to 85 wt % of the resin-forming mixture.

25. A process according to claim 17 wherein the photoinitiator comprises an aromatic hydroxy compound.

26. A process according to claim 17 wherein the photoinitiator comprises 2-hydroxy-2-methyl-1-phenyl-propan-1-one.

27. A process according to claim 17 wherein the photoinitiator comprises from 0.2 to 1.5 wt % of the resin-forming mixture.

28. A process according to claim 17 wherein the photoinitiator comprises from 0.2 to 0.8 wt % of the resin-forming mixture.

29. A process according to claim 17 wherein the thermally activated catalyst comprises benzoyl peroxide, 2,5-dimethyl-2,5-bis-(2-ethylhexyl peroxy)hexane, t-amyl peroxyoctoate, t-butyl peroxyoctoate, lauroyl peroxide, 1,1-bis-t-butyl peroxy cyclohexane, 1,1-bis-t-amyl peroxy cyclohexane, or dicumyl peroxide.

30. A process according to claim 17 wherein the thermally activated catalyst comprises tertiary-butyl peroxybenzoate.

31. A process according to claim 17 wherein the thermally activated catalyst comprises from 0.2 to 1.5 wt % of the resin-forming mixture.

32. A process according to claim 17 wherein the coupling agent comprises an organic titanate ester or an organosilane or mixtures thereof.

33. A process according to claim 17 wherein the coupling agent comprises an amino methoxy silane, methacryloxypropyl tri-methoxy silane, or an epoxy methoxy silane.

34. A process according to claim 17 wherein the coupling agent comprises glycidoxypropyltrimethoxysilane.

35. A process according to claim 17 wherein the coupling agent comprises from 0.5 to 3.0 wt % of the resin-forming mixture.

## Patentansprüche

1. Ein dekoratives Laminat, das hergestellt ist durch Verfestigen einer Mehrzahl von Schichten unter Hitze und Druck und das eine äußere Schutzschicht aufweist, wobei das Laminat umfaßt:
eine hitzegehärtete, mit Harz imprägnierte Kernpapierschicht;
eine hitzegehärtete, mit Harz imprägnierte dekorative Papierschicht, die an die Kernschicht gebunden ist;
eine äußere Schutzschicht, die an die dekorative Schicht gebunden ist, wobei die Schutzschicht hergestellt wird durch Polymerisieren einer harzbildenden Mischung, welche umfaßt:
(1) ungesättigte harzbildende Materialien, die acryliertes Urethan und ein Verdünnungsmonomer umfassen, und
(2) einen Photoinitiator,
dadurch gekennzeichnet, daß die harzbildende Mischung einen thermisch aktivierten Katalysator einschließt und außerdem genügend Photoinitiator einschließt zum teilweisen Aushärten der harzbildenden Mischung bis zu einer klebfreien B-Stufe zur Erleichterung der weiteren Handhabung der äußeren Schutzschicht aus Acrylat und/oder Methacrylat vor der Verfestigung der harzbildenden Schichten, wobei besagte harzbildende Mischung außerdem einen Haftvermittler umfaßt; das Verdünnungsmonomer ausgewählt ist aus der Gruppe, die aus Trimethylolpropantriacrylat, Pentaerythritoltriacrylat oder Dipentaerythritolhydroxypentaacrylat oder Mischungen derselben besteht; die harzbildende Mischung genügend thermisch aktivierten Katalysator einschließt zum im wesentlichen vollständigen Aushärten der harzbildenden Mischung während der Verfestigung der harzbildenden Schichten unter Hitze und Druck, wodurch ein dekoratives Laminat bereitgestellt wird mit einer äußeren Schutzschicht aus Acrylat und/oder Methacrylat mit verbesserten Delaminierungseigenschaften.

2. Ein dekoratives Laminat nach Anspruch 1, wobei der Haftvermittler einen Organosilan-Haftvermittler umfaßt.

3. Ein dekoratives Laminat nach Anspruch 1, wobei die harzbildenden Materialien besagtes acryliertes Urethan und Trimethylolpropantriacrylat umfassen.

4. Ein dekoratives Laminat nach Anspruch 1, wobei die harzbildenden Materialien besagtes acryliertes Urethan und Dipentaerythritolhydroxypentaacrylat umfassen.

5. Ein dekoratives Laminat nach Anspruch 3, wobei die harzbildenden Materialien von 15 bis 45 Gew.-% Trimethylolpropantriacrylat umfassen.

6. Ein dekoratives Laminat nach Anspruch 3, wobei die harzbildenden Materialien von 25 bis 35 Gew.-% Trimethylolpropantriacrylat umfassen.

7. Ein dekoratives Laminat nach Anspruch 1, wobei die harzbildende Mischung außerdem einen Weichmacher, einen Füllstoff, ein Pigment oder einen Stabilisator umfaßt.

8. Ein dekoratives Laminat nach Anspruch 1, wobei die harzbildenden Materialien von 55 bis 85 Gew.-% der harzbildenden Mischung umfassen.

9. Ein dekoratives Laminat nach Anspruch 1, wobei der Photoinitiator eine aromatische Hydroxyverbindung umfaßt.

10. Ein dekoratives Laminat nach Anspruch 1, wobei der Photoinitiator 2-Hydroxy-2-methyl-1-phenylpropan-1-on umfaßt.

11. Ein dekoratives Laminat nach Anspruch 1, wobei der Photoinitiator von 0,2 bis 1,5 Gew.-% der harzbildenden Mischung umfaßt.

12. Ein dekoratives Laminat nach Anspruch 1, wobei der Photoinitiator von 0,2 bis 0,8 Gew.-% der harzbildenden Mischung umfaßt.

13. Ein dekoratives Laminat nach Anspruch 1, wobei der thermisch aktivierte Katalysator von 0,2 bis 0,8 Gew.-% der harzbildenden Mischung umfaßt.

14. Ein dekoratives Laminat nach Anspruch 2, wobei der Haftvermittler ein Aminomethoxysilan, Methacryloxypropyltrimethoxysilan oder ein Epoxymethoxysilan umfaßt.

15. Ein dekoratives Laminat nach Anspruch 2, wobei der Haftvermittler Glycidoxypropyltrimethoxysilan umfaßt.

16. Ein dekoratives Laminat nach Anspruch 2, wobei der Haftvermittler von 0,5 bis 3,0 Gew.-% der harzbildenden Mischung umfaßt.

17. Ein Verfahren zur Herstellung eines dekorativen Laminats mit einer äußeren Schutzschicht, die das Übereinanderschichten wenigstens einer Kernschicht aus mit hitzehärtbarem Harz imprägniertem Papier, einer dekorativen Papierschicht, die mit hitzehärtbarem Harz imprägniert ist, und einer Schutzschicht, die gebildet wird aus einer harzbildenden Mischung, die ungesättigte harzbildende Materialien einschließt, die acryliertes Urethan und ein Verdünnungsmonomer umfassen, und außerdem einen Photoinitiator einschließt, und das Verfestigen besagter Schichten unter Hitze und Druck umfaßt, um besagtes Laminat zu bilden, dadurch gekennzeichnet, daß besagte Schutzschicht gebildet wird durch:
Aufbringen besagter harzbildenden Mischung auf eine Abziehfolie, wobei das Monomer in besagter Mischung ausgewählt ist aus der Gruppe, die aus Trimethylolpropantriacrylat, Pentaerythritoltriacrylat oder Dipentaerythritolhydroxypentaacrylat oder Mischungen derselben besteht;
wobei besagte Mischung außerdem genügend Photoinitiator umfaßt zur teilweise Aushärtung der harzbildenden Mischung bis zu einer klebfreien B-Stufe; und außerdem einen thermisch aktivierten Katalysator und einen Haftvermittler einschließt;
wobei das Verfahren einschließt, daß die harzbildende Mischung auf der Abziehfolie mit ultravioletter Strahlung bis zu einem klebfreien B-Stufe teilweise ausgehärtet wird;
Aufbringen der Abziehfolie, die die teilweise ausgehärtete harzbildende Mischung enthält, oben auf eine dekorative Schicht aus Papier, die mit einem teilweise ausgehärteten hitzehärtbaren Harz imprägniert ist, wobei die teilweise ausgehärtete harzbildende Mischung mit der oberen Oberfläche der dekorativen Schicht in Kontakt kommt;
Aufbringen der dekorativen Schicht über einer Kernschicht aus Papier, die mit einem teilweise ausgehärteten hitzehärtbaren Harz imprägniert ist, und
Verfestigen der Schutzschicht, dekorativen Schicht und Kernschicht unter Hitze und Druck, um das dekorative Laminat zu bilden, wobei die harzbildende Mischung genügend thermisch aktivierten Katalysator einschließt zur im wesentlichen vollständigen Aushärtung der harzbildenden Mischung während der Verfestigung der harzbildenden Schichten unter Hitze und Druck.

18. Ein Verfahren nach Anspruch 17, wobei der Haftvermittler einen Organosilan-Haftvermittler umfaßt.

19. Ein Verfahren nach Anspruch 17, wobei die harzbildenden Materialien besagtes acryliertes Urethan und Trimethylolpropantriacrylat umfassen.

20. Ein Verfahren nach Anspruch 17, wobei die harzbildenden Materialien besagtes acryliertes Urethan und Dipentaerythrytolhydroxypentaacrylat umfassen.

21. Ein Verfahren nach Anspruch 19, wobei das harzbildende Material von 15 bis 45 Gew.-% Trimethylolpropantriacrylat umfaßt.

22. Ein Verfahren nach Anspruch 19, wobei die harzbildenden Materialien von 25 bis 35 Gew.-% Trimethylolpropantriacrylat umfassen.

23. Ein Verfahren nach Anspruch 17, wobei die harzbildende Mischung außerdem einen Weichmacher, einen Füllstoff, ein Pigment oder einen Stabilisator umfaßt.

24. Ein Verfahren nach Anspruch 17, wobei die harzbildenden Materialien von 55 bis 85 Gew.-% der harzbildenden Mischung umfassen.

25. Ein Verfahren nach Anspruch 17, wobei der Photoinitiator eine aromatische Hydroxyverbindung umfaßt.

26. Ein Verfahren nach Anspruch 17, wobei der Photoinitiator 2-Hydroxy-2-methyl-1-phenylpropan-1-on umfaßt.

27. Ein Verfahren nach Anspruch 17, wobei der Photoinitiator von 0,2 bis 1,5 Gew.-% der harzbildenden Mischung umfaßt.

28. Ein Verfahren nach Anspruch 17, wobei der Photoinitiator von 0,2 bis 0,8 Gew.-% der harzbildenden Mischung umfaßt.

29. Ein Verfahren nach Anspruch 17, wobei der thermisch aktivierte Katalysator Benzoylperoxid, 2,5-Dimethyl-2,5-bis-(2-ethylhexylperoxy)hexan, tert.-Amylperoryoctoat, tert.-Butylperoxyoctoat, Lauroylperoxid, 1,1-Bis-tert.-butylperoxycyclohexan, 1,1-Bis-tert.-amylperoxycyclohexan oder Dicumylperoxid umfaßt.

30. Ein Verfahren nach Anspruch 17, wobei der thermisch aktivierte Katalysator tert.-Butylperoxybenzoat umfaßt.

31. Ein Verfahren nach Anspruch 17, wobei der thermisch aktivierte Katalysator von 0,2 bis 1,5 Gew.-% der harzbildenden Mischung umfaßt.

32. Ein Verfahren nach Anspruch 17, wobei der Haftvermittler einen organischen Titanatester oder ein Organosilan oder Mischungen derselben umfaßt.

33. Ein Verfahren nach Anspruch 17, wobei der Haftvermittler einen Aminomethoxysilan, Methacryloxypropyltrimethoxysilan oder ein Epoxymethoxysilan umfaßt.

34. Ein Verfahren nach Anspruch 17, wobei der Haftvermittler Glycidoxypropyltrimethoxysilan umfaßt.

35. Ein Verfahren nach Anspruch 17, wobei der Haftvermittler von 0,5 bis 3,0 Gew.-% der harzbildenden Mischung umfaßt.

## Revendications

1. Stratifié décoratif produit par consolidation de nombreuses couches sous chaleur et pression et ayant une couche externe protectrice, le stratifié comprenant :
une couche de papier de noyau imprégnée de résine thermodurcissable ;
une couche de papier décorative imprégnée de résine thermodurcissable liée à la couche de noyau ;
une couche externe protectrice liée à la couche décorative, la couche protectrice étant produite par polymérisation d'un mélange formant une résine comprenant :
(1) des matériaux insaturés formant une résine comprenant de l'uréthane acrylé et un monomère de dilution et
(2) un photoinitiateur,
caractérisé en ce que le mélange formant une résine comprend un catalyseur thermiquement activé et comprend en outre suffisamment de photoinitiateur pour réticuler partiellement le mélange formant une résine dans une étape B sans état collant pour faciliter la manipulation subséquente de la couche externe protectrice d'acrylate et/ou de méthacrylate avant la consolidation des couches formant une résine, ledit mélange formant une résine comprenant en outre un agent de couplage ; le monomère de dilution étant choisi parmi le triacrylate de triméthylolpropane, le triacrylate de pentaérythritol ou l'hydroxypentacrylate de dipentaérythritol ou des mélanges de ceux-ci ; le mélange formant une résine comprenant suffisamment de catalyseur thermiquement activé pour réticuler pratiquement complètement le mélange formant une résine pendant la consolidation des couches formant une résine sous chaleur et pression, fournissant par là un stratifié décoratif ayant une couche externe protectrice d'acrylate et/ou de méthacrylate avec des caractéristiques de déstrastification améliorées.

2. Stratifié décoratif selon la revendication 1, dans lequel l'agent de couplage comprend un agent de couplage d'organosilane.

3. Stratifié décoratif selon la revendication 1, dans lequel les matériaux formant une résine comprennent lesdits uréthane acrylé et triacrylate de triméthylolpropane.

4. Stratifié décoratif selon la revendication 1, dans lequel les matériaux formant une résine comprennent lesdits uréthane acrylé et hydroxypentacrylate de dipentaérythritol.

5. Stratifié décoratif selon la revendication 3, dans lequel les matériaux formant une résine constituent de 15 à 45 % en poids de triacrylate de triméthylolpropane.

6. Stratifié décoratif selon la revendication 3, dans lequel les matériaux formant une résine comprennent de 25 à 35 % en poids de triacrylate de triméthylolpropane.

7. Stratifié décoratif selon la revendication 1, dans lequel le mélange formant une résine comprend en outre un plastifiant, une charge, un pigment ou un stabilisateur.

8. Stratifié décoratif selon la revendication 1, dans lequel les matériaux formant une résine constituent de 55 à 85 % en poids du mélange formant une résine.

9. Stratifié décoratif selon la revendication 1, dans lequel le photoinitiateur comprend un composé hydroxy aromatique.

10. Stratifié décoratif selon la revendication 1, dans lequel le photoinitiateur comprend de la 2-hydroxy-2-méthyl-1-phénylpropan-1-one.

11. Stratifié décoratif selon la revendication 1, dans lequel le photoinitiateur constitue de 0,2 à 1,5 % en poids du mélange formant une résine.

12. Stratifié décoratif selon la revendication 1, dans lequel le photoinitiateur constitue de 0,2 à 0,8 % en poids du mélange formant une résine.

13. Stratifié décoratif selon la revendication 1, dans lequel le catalyseur thermiquement activé constitue de 0,2 à 0,8 % en poids du mélange formant une résine.

14. Stratifié décoratif selon la revendication 2, dans lequel l'agent de couplage comprend un aminométhoxysilane, du méthacryloxypropyltriméthoxysilane ou un époxyméthoxysilane.

15. Stratifié décoratif selon la revendication 2, dans lequel l'agent de couplage comprend du glycidoxypropyltriméthoxysilane.

16. Stratifié décoratif selon la revendication 2, dans lequel l'agent de couplage constitue de 0,5 à 3,0 % en poids du mélange formant une résine.

17. Procédé de fabrication d'un stratifié décoratif ayant une couche externe protectrice comprenant la superposition d'au moins une couche de noyau de papier imprégnée de résine thermodurcissable, d'une couche de papier décorative imprégnée avec de la résine thermodurcissable et une couche protectrice formée à partir d'un mélange formant une résine incluant des matériaux insaturés formant une résine comprenant de l'uréthane acrylé et un monomère de dilution et incluant en outre un photoinitiateur et la consolidation desdites couches sous chaleur et pression pour former ledit stratifié, caractérisé en ce que ladite couche protectrice est formée par :
revêtement sur une feuille de séparation dudit mélange formant une résine, le monomère dans ledit mélange étant choisi parmi le triacrylate de triméthylolpropane, le triacrylate de pentaérythritol ou l'hydroxypentacrylate de dipentaérythritol ou des mélanges de ceux-ci ;
ledit mélange comprenant en outre suffisamment de photoinitiateur pour réticuler partiellement le mélange formant une résine dans une étape B sans état collant ; et comprenant en outre un catalyseur thermiquement activé et un agent de couplage ;
le procédé comprenant la réticulation partielle du mélange formant une résine sur la feuille de séparation avec un rayonnement ultraviolet jusqu'à une étape B sans état collant ;
le placement de la feuille de séparation contenant le mélange formant une résine partiellement réticulée sur le haut d'une couche en papier décorative imprégnée de résine thermodurcissable partiellement réticulée avec le mélange formant une résine partiellement réticulé en contact avec la surface de haut de la couche décorative ;
le placement de la couche décorative sur une couche de noyau en papier imprégnée de résine thermodurcissable partiellement réticulée, et
la consolidation de la couche protectrice, de la couche décorative et de la couche de noyau sous chaleur et pression pour former le stratifié décoratif, ledit mélange formant une résine comprenant suffisamment de catalyseur thermiquement activé pour réticuler pratiquement complètement le mélange formant une résine pendant la consolidation des couches formant une résine sous chaleur et pression.

18. Procédé selon la revendication 17, dans lequel l'agent de couplage comprend un agent de couplage d'organosilane.

19. Procédé selon la revendication 17, dans lequel les matériaux formant une résine comprennent lesdits uréthane acrylé et triacrylate de triméthylolpropane.

20. Procédé selon la revendication 17, dans lequel les matériaux formant une résine comprennent lesdits uréthane acrylé et hydroxypentacrylate de dipentaérythritol.

21. Procédé selon la revendication 19, dans lequel les matériaux formant une résine comprennent de 15 à 45 % en poids de triacrylate de triméthylolpropane.

22. Procédé selon la revendication 19, dans lequel les matériaux formant une résine comprennent de 25 à 35 % en poids de triacrylate de triméthylolpropane.

23. Procédé selon la revendication 17, dans lequel le mélange formant une résine comprend en outre un plastifiant, une charge, un pigment ou un stabilisateur.

24. Procédé selon la revendication 17, dans lequel les matériaux formant une résine constituent de 55 à 85 % en poids du mélange formant une résine.

25. Procédé selon la revendication 17, dans lequel le photoinitiateur comprend un composé hydroxy aromatique.

26. Procédé selon la revendication 17, dans lequel le photoinitiateur comprend de la 2-hydroxy-2-méthyl-1-phényl-propan-1-one.

27. Procédé selon la revendication 17, dans lequel le photoinitiateur constitue de 0,2 à 1,5 % en poids du mélange formant une résine.

28. Procédé selon la revendication 17, dans lequel le photoinitiateur constitue de 0,2 à 0,8 % en poids du mélange formant une résine.

29. Procédé selon la revendication 17, dans lequel le catalyseur thermiquement activé comprend du peroxyde de benzoyle, du 2,5-diméthyl-2,5-bis-(2-éthylhexylperoxy)hexane, du peroxyoctoate de t-amyle, du peroxyoctoate de t-butyle, du peroxyde de lauroyle, du 1,1-bis-t-butylperoxycyclohexane, du 1,1-bis-t-amylperoxycyclohexane ou du peroxyde de dicumyle.

30. Procédé selon la revendication 17, dans lequel le catalyseur thermiquement activé comprend du peroxybenzoate de tert-butyle.

31. Procédé selon la revendication 17, dans lequel le catalyseur thermiquement activé constitue de 0,2 à 1,5 % en poids du mélange formant une résine.

32. Procédé selon la revendication 17, dans lequel l'agent de couplage comprend un ester organique de titanate ou un organosilane ou des mélanges de ceux-ci.

33. Procédé selon la revendication 17, dans lequel l'agent de couplage comprend un aminométhoxysilane, du méthacryloxypropyltriméthoxysilane ou un époxyméthoxysilane.

34. Procédé selon la revendication 17, dans lequel l'agent de couplage comprend du glycidoxypropyltriméthoxysilane.

35. Procédé selon la revendication 17, dans lequel l'agent de couplage constitue de 0,5 à 3,0 % en poids du mélange formant une résine.
